# EUROPÄISCHE PATENTSCHRIFT

(11) **EP 0 999 093 B1**
(45) Veröffentlichungstag und Bekanntmachung des Hinweises auf die Patenterteilung: **22.08.2007**
(21) Anmeldenummer: 99120111.2
(22) Anmeldetag: 08.10.1999
(51) Int. Cl.: B60N 2/48

(54) **Kopfstützenanordnung für einen Fahrzeugsitz**
Headrest assembly for vehicle seats
Agencement d'appui-tête pour sièges de véhicules

(30) Priorität: 04.11.1998 DE 19850754
(43) Veröffentlichungstag der Anmeldung: 10.05.2000
(73) Patentinhaber: Volkswagen Aktiengesellschaft, 38436 Wolfsburg (DE)
(72) Erfinder: Albrecht, Björn, Dipl.-Ing., 38527 Meine (DE)
(74) Vertreter: Schneider, Henry

(56) Entgegenhaltungen:
- WO-A-97/11860
- DE-A- 3 136 648
- DE-A- 3 332 729
- DE-A- 3 621 278
- FR-A- 1 588 965
- GB-A- 1 182 523
- US-A- 3 304 120

## Beschreibung

Die Erfindung betrifft eine Kopfstützenanordnung für einen Fahrzeugsitz gemäß dem Oberbegriff des Patenanspruchs 1.

Eine aus der DE 36 21 278 A1 bekannte gattungsgemäße Kopfstützenanordnung sieht eine in Seitenansicht gleichsam zwei Winkel bildende, durch Querunterteilung zweistückige Kopfstütze vor, die um eine feste rückenlehnenseitige Schwenkachse zwischen einer Betriebsstellung, in der sie gleichsam in Fortsetzung der Rückenlehne verläuft, und einer Ruhestellung schwenkbar ist, in der sie entweder (bei zusammengeschobener Lage ihrer beiden Stücke) auf einer Hutablage aufliegt oder (bei maximalem Abstand zwischen ihren beiden Kopfstützenstücken) in eine Vertiefung der Hutablage eintaucht. Abgesehen davon, daß diese bekannte Konstruktion eine spezielle Ausbildung der Hutablage, nämlich mit einer Vertiefung, wodurch die Hutablage nicht für ihre eigentliche Aufgabe ausgebildet sein kann, erfordert, ist die Konstruktion der Kopfstütze selbst infolge ihrer Zweistückigkeit und der Relativbewegbarkeit der beiden Einzelstücke kompliziert getroffen. Bei diesem Stand der Technik dient nämlich die Zweistückigkeit der Kopfstütze letztlich zur Höheneinstellung derselben, und zwar unabhängig von der durch die jeweilige Neigung der Kopfstütze einstellbaren Nähe zu dem zu schützenden Fahrzeuginsassen (Kopfnähe).

Die aus der DE 31 36 648 A1 bekannte Kopfstützenanordnung sieht eine flache Vertiefung in der Rückenlehne vor, in die die Kopfstütze in ihrer Ruhestellung eintaucht; die Kopfstütze kann aus dieser flache Ruhestellung in ihre Betriebsstellung um eine feste Schwenkachse hochgeschwenkt werden, und zwar beim Ansprechen eines in das Sitzkissen integrierten elektrischen Schalters. Die Schwenkbewegung erfolgt motorisch über eine Ritzel-Zahnsegment-Kombination. Nachteilig bei diesem Stand der Technik, der in Abweichung von der oben behandelten Offenlegungsschrift eine einstückige Kopfstütze offenbart, ist die Tatsache, daß offenbar die Höhe der Kopfstütze nicht eingestellt und damit an die jeweiligen Verhältnisse des Insassen angepaßt werden kann.

Bekannt ist schließlich - siehe die DE 33 32 729 A1 - die Verwendung einer nicht festen Schwenkachse, sondern die Führung der Kopfstütze zwischen einer Ruhestellung, in der sie in einer Vertiefung der Hutablage abgelegt ist, einerseits und ihrer Arbeitsstellung andererseits längs kurvenförmiger, lehnenseitig befestigter Gleitschienen. Dargestellt und offenbart sind kreisbogenförmige Gleitschienen.

Aus FR 1 588 965 ist eine Kopfstützenanordnung bekannt, bei der eine Kopfstütze über einen Haltearm am oberen Abschluss einer Sitzrückenlehne befestigt ist. Die Kopfstütze ist um eine Drehachse von einer Ruhestellung in einer Arbeitsstellung verlagerbar.

DE 94 17 320 U1 zeigt ein Wohnzimmer-Polstermöbel, bei dem ein oberer Abschnitt einer Rückenlehne insgesamt um eine Drehachse verschwenkbar ist. Hierdurch kann wahlweise eine hohe Nacken-Kopfstütze ausgebildet werden.

Der Erfindung liegt die Aufgabe zugrunde, eine gattungsgemäße Kopfstützenanordnung so auszubilden, daß sie bei einfachem Aufbau, insbesondere Einstückigkeit der Kopfstütze, einerseits in ihrer Ruhestellung den optischen Eindruck des Rücksitzes, in der Regel einer Rücksitzbank, nicht beeinträchtigt, andererseits in ihrer Betriebsstellung optimal den Größenverhältnissen des Fahrzeuginsassen angepaßt ist.

Die erfindungsgemäße Lösung dieser Aufgabe besteht in den kennzeichnenden Merkmalen des Patentanspruchs 1. Eine vorteilhafte Ausführung der Lagerung ist Gegenstand des Unteranspruchs.

Die bumerangartige Form der Kopfstütze ermöglicht einerseits die Unterbringung der Kopfstütze in ihrer gesamten Größe in der Vertiefung oder Ausnehmung der Rückenlehne und bietet mit der konvexen Form der Vorderseite die Möglichkeit, durch entsprechende Kopplung von Einstellung der Höhe der Kopfstütze und Kopfnähe derselben in ihren Betriebsstellungen die Erzielung sicherheitstechnisch optimaler Verhältnisse. Dabei sind die Einstellung von Kopfnähe und Höhe der Kopfstütze durch entsprechende Ausbildung der Mehrgelenklagerung im Hinblick auf die Einhaltung erfahrungsgemäß optimaler Wertepaarungen für diese beiden Parameter gewählt.

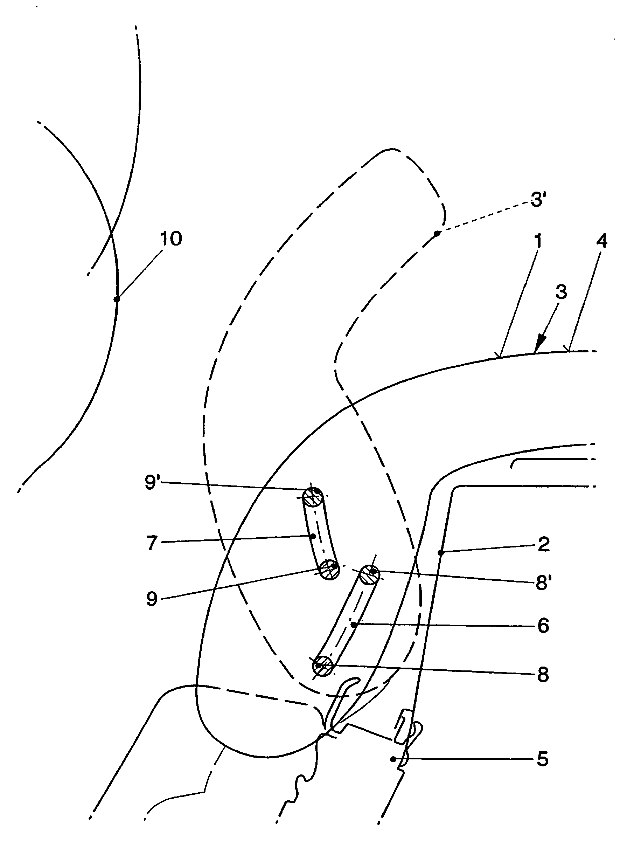

Ein Ausführungsbeispiel der Erfindung zeigt schematisch die Zeichnung, die einen Längsschnitt durch die Rücksitzbank eines Kraftfahrzeugs im Bereich der Kopfstütze wiedergibt.

Von dem eigentlichen Fahrzeug, das heißt dem Rohbau, ist lediglich bei 1 die Kontur der Rückenlehne des Sitzes angedeutet, hinter dem der Rohbau-Querträger 2 verläuft. In der Figur nach rechts schließt sich an die Rückenlehne 1 die übliche, nicht dargestellte Hutablage an, die im Rahmen der Ausgestaltung der erfindungswesentlichen Teile keine Rolle spielt.

Betrachtet man die Kopfstütze in ihrer mit 3 bezeichneten Ruhestellung, die sie einnimmt, wenn auf dem ihr zugeordneten Sitz kein Insasse Platz genommen hat (bei Belegung des Sitzes kann sie über einen Sitzkontaktschalter motorisch in ihre Betriebsstellung geschwenkt werden), so verläuft ihre konvexe Vorderseite 4 bündig mit der Kontur 1 der Rückenlehne. Man erkennt, daß die Kopfstütze in Seitenansicht etwa bumerangähnlich unter Bildung eines an ihrer Rückseite besonders deutlich werdenden Winkels geformt ist, so daß sie sich leicht der Kontur 1 der Rückenlehne anpaßt.

Zur Vervollständigung der Beschreibung sei darauf hingewiesen, daß bei 5 ein üblicher Skisack zum Durchladen von Skiern von der Rückseite des Fahrzeugs her vorgesehen ist. Dies zeigt, daß die erfindungsgemäßen konstruktiven Maßnahmen die Ausgestaltung des Fahrzeugs hinsichtlich weiterer Einzelheiten nicht behindern.

Die in ihrer Ablagestellung also mit 3 bezeichnete Kopfstütze wird bei Belegung des ihr zugeordneten Sitzes mit einem Fahrzeuginsassen in der Figur entgegen dem Uhrzeigersinn aus der Ruhestellung 3 verschwenkt, und zwar unter Verwendung von lehnenseitigen Langlöchern 6 und 7 und kopfstützenseitigen Zapfen 8 und 9 (Bezeichnungen in der Ruhestellung 3 der Kopfstütze), die in den Langlöchern oder Kulissenführungen 6 und 7 laufen.

Die Lage der Zapfen bei der Stellung 3' der Kopfstütze ist durch entsprechende Apostrophierungen gekennzeichnet.

Mit der Erfindung ist demgemäß eine gattungsgemäße Kopfstützenanordnung geschaffen, die zur optimalen Einstellung von Höhe und Kopfnähe der Kopfstütze mit einer einstückigen Kopfstütze solcher Form auskommt, daß sie in ihrer Ruhestellung mit ihrer Vorderseite bündig mit der Kontur der Rückenlehne verläuft. Zur Klarstellung sei darauf hingewiesen, daß unter "einstückig" das äußere Erscheinungsbild der Kopfstütze verstanden wird, die ihrerseits aber verständlicherweise aus einer Vielzahl von Einzelteilen aufgebaut ist.

## Patentansprüche

1. Kopfstützenanordnung für einen Fahrzeugsitz mit einer Sitzrückenlehne, die in einem oberen Lehnenbereich eine Ausnehmung zur Aufnahme einer in Ruhestellung befindlichen Kopfstütze aufweist, der eine Lagerung zur Schwenkung aus der Ruhestellung in eine Arbeitsstellung zugeordnet ist, **dadurch gekennzeichnet, daß** die Kopfstütze (3) einstückig und in Seitenansicht bumerangähnlich einen Winkel bildend mit einer in Fahrtrichtung weisenden konvexen Vorderseite (4) ausgebildet ist, deren Kontur bei in Ruhestellung befindlicher Kopfstütze (3) praktisch stufenlos in die Kontur (1) der Rückenlehne übergeht.

2. Kopfstützenanordnung nach Anspruch 1, **dadurch gekennzeichnet, daß** die Lagerung eine Mehrgelenklagerung (6, 8; 7, 9) mit Kulissenführungen (6, 7) zur insassenoptimalen gekoppelten Einstellung von Höhe und Kopfnähe der Kopfstütze ist.

## Claims

1. Headrest arrangement for a vehicle seat with a seat backrest, which, in an upper rest region, has a recess for receiving a headrest located in the inoperative position, a bearing being allocated to said headrest for swivelling from the inoperative position into an operative position, **characterized in that** the headrest (3) is of one-piece design and forms in a side view in a boomerang-like manner an angle with a convex front side (4) pointing in the direction of travel, the contour of said front side forming a practically stepless transition to the contour (1) of the backrest in the case of a headrest (3) located in the inoperative position.

2. Headrest arrangement according to Claim 1, **characterized in that** the bearing is a multiple joint bearing (6, 8; 7, 9) with sliding block guides (6, 7) for coupled setting of height and head proximity of the headrest in an optimum manner for the occupant.

## Revendications

1. Agencement d'appuie-tête pour un siège de véhicule avec un dossier de siège, qui présente dans une zone supérieure du dossier une cavité destinée à recevoir un appuie-tête se trouvant en position de repos, auquel est associé un appui lui permettant de pivoter de la position de repos à une position de travail, **caractérisé en ce que** l'appuie-tête (3) est réalisé en une seule pièce formant, en vue latérale, un angle en forme de boomerang avec une face avant convexe (4) orientée dans la direction de déplacement, dont le contour prolonge pratiquement sans discontinuer le contour (1) du dossier lorsque l'appuie-tête (3) se trouve en position de repos.

2. Agencement d'appuie-tête selon la revendication 1, **caractérisé en ce que** l'appui est un appui à plusieurs articulations (6, 8; 7, 9) avec des coulisses de guidage (6, 7) pour le réglage couplé de la hauteur et de la distance entre la tête et l'appuie-tête, optimal pour l'occupant du siège.
